# EUROPÄISCHE PATENTSCHRIFT

(11) **EP 1 419 639 B1**
(45) Veröffentlichungstag und Bekanntmachung des Hinweises auf die Patenterteilung: **26.10.2005**
(21) Anmeldenummer: 02796162.2
(22) Anmeldetag: 26.08.2002
(51) Int. Cl.: H04L 29/06, H04L 12/56

(54) **VERFAHREN ZUR ÜBERTRAGUNG VON DATENPAKETEN IN EINEM FUNK-KOMMUNIKATIONSSYSTEM SOWIE ENTSPRECHENDE FUNKSTATION**
METHOD FOR THE TRANSMISSION OF DATA PACKETS IN A RADIO COMMUNICATION SYSTEM AND CORRESPONDING RADIO STATION
PROCEDE DE TRANSMISSION DE PAQUETS DE DONNEES DANS UN SYSTEME DE COMMUNICATION RADIO ET STATION RADIO CORRESPONDANTE

(30) Priorität: 24.08.2001 DE 10141512
(43) Veröffentlichungstag der Anmeldung: 19.05.2004
(73) Patentinhaber: SIEMENS AKTIENGESELLSCHAFT, 80333 München (DE)
(72) Erfinder: GESSNER, Christina, 81373 München (DE); KROTH, Norbert, 14471 Potsdam (DE); MEILING, Axel, 13597 Berlin (DE)
(86) Internationale Anmeldenummer: PCT/DE2002/003127
(87) Internationale Veröffentlichungsnummer: WO 2003/019895

(56) Entgegenhaltungen:
- EP-A- 1 193 938
- WO-A-00/20876
- US-A- 5 734 867
- SKOLD J ET AL: "Cellular evolution into wideband services" VEHICULAR TECHNOLOGY CONFERENCE, 1997, IEEE 47TH PHOENIX, AZ, USA 4-7 MAY 1997, NEW YORK, NY, USA,IEEE, US, 4. Mai 1997 (1997-05-04), Seiten 485-489, XP010228889 ISBN: 0-7803-3659-3
- HOFERKAMP W ET AL: "A power and mobility-aware wireless protocol for AD-HOC networks" DEPARTMENT OF COMPUTER SCIENCE OLD DOMINION UNIVERSITY, NORFOLK, VA, USA, Juni 2000 (2000-06), Seiten 292-296, XP010532602 NEW YORK, NY, USA, IEEE, US

## Beschreibung

Die Erfindung betrifft ein Verfahren und eine Funkstation zur Übertragung von Datenpaketen in einem Funk-Kommunikationssystem, insbesondere in einem Mobilfunksystem.

In Funk-Kommunikationssystemen werden Informationen, wie beispielsweise Sprache, Bildinformationen oder andere Daten, mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA-Übertragungsverfahren über die Funkschnittstelle, beispielsweise das UMTS (Universal Mobile Telecommunications System) oder andere Systeme der 3. Generation sind Frequenzen im Frequenzband von ca. 2000 MHz vorgesehen. Frequenzmultiplex (FDMA), Zeitlagenmultiplex (TDMA) oder ein als Codemultiplex (CDMA) bekanntes Verfahren dienen dabei der Unterscheidung der Signalquellen.

Im Rahmen der Spezifizierung des UMTS-Standards werden derzeit Verfahren definiert, welche für Paketübertragungen optimiert sein sollen. Ein Beispiel hierfür ist der so genannte High Speed Downlink Packet Acces (HSDPA) für den FDD- (Frequency Division Duplex) und TDD-Modus (Time Division Duplex) des UMTS-Standards. Diese Verfahren sollen Dienste (engl. Services) mit verschiedenen Anforderungen hinsichtlich einer Dienstequalität (engl. QoS - Quality of Service) bedienen können. Dabei ist eine Basisstation (NB - Node B) verantwortlich für das so genannte Scheduling von Daten verschiedener Teilnehmer, sowie für so genannte Retransmissions, d.h. wiederholte Übertragungen von fehlerhaft empfangenen Datenpaketen in einem so genannten Hybrid ARQ-Prozess. Hybrid ARQ-Verfahren ziehen ihren Vorteil daraus, dass fehlerhaft empfangene Datenpakete in einem Speicher im Empfänger gespeichert werden, um sie mit nachfolgenden, nochmaligen und gegebenenfalls veränderten Übertragungen der Datenpakete kombinieren zu können. Hierdurch kann im Gegensatz zu bekannten reinen ARQ-Verfahren, in denen fehlerhafte Datenpakete empfangsseitig verworfen werden, vorteilhaft auch von den bereits empfangenen Datenpaketen zur Erhöhung der Empfangsqualität profitiert werden.

Um einen effizienten Zeitplanungsmechanismus bei der Übertragung von Datenpaketen verschiedener Dienste mit gegebenenfalls unterschiedlichen Dienstequalitäts-Anforderungen zu verwirklichen, wird die Zuweisung von Ressourcen zu diesen gegebenenfalls hochdatenratigen Diensten sowie die Steuerung des HARQ-Protokolls in der Basisstation durchgeführt. Dennoch stehen der Basisstation keine vollständigen Informationen über beispielsweise eingehende Daten für verschiedene Teilnehmer und deren Zwischenspeicherstatus zur Verfügung, da diese allein in den übergeordneten so genannten versorgenden Funknetzsteuerungen (SRNC - Serving Radio Network Controller) verfügbar sind. Flusskontrollmechanismen (Flow Control Mechanism) werden verwendet, um eine effiziente Übertragung der Daten verschiedener Teilnehmer von möglichen unterschiedlichen SRNCs zu den Basisstationen sicher zu stellen. Zudem können sich die Datenströme eines Teilnehmers und zwischen Teilnehmern bezüglich der jeweils erforderlichen Dienstequalität, d.h. Übertragungsverzögerung, Datenrate, akzeptable Fehlerrate usw., unterscheiden.

Aufgrund dieser Komplexität und der durch den Flusskontrollmechanismus zu erfüllenden hohen Anforderungen müssen weitere Mechanismen in der Basisstation verfügbar sein, die einen effizienten Zeitplanungsprozess (Scheduling) zur Erfüllung der Dienstqualitäts-Anforderungen von verschiedenen Datenströmen für verschiedene Teilnehmer gewährleisten. Es wird angenommen, dass die Dienstqualitätsbehandlung von verschiedenen Datenströmen auf von dem Flusskontrollmechanismus in der Funknetzsteuerung (RNC - Radio Network Controller) zugewiesenen Prioritätswerten basiert. Diese Prioritätswerte werden aus den Dienstqualitätsparametern der Datenströme abgeleitet. Es wird weiterhin angenommen, dass die Basisstation diese Prioritätswerte für jeden Datenstrom von der Funknetzsteuerung empfängt.

Eine Berücksichtigung der Dienstequalitäten in dem Zeitplanungsprozess des HSDPA ist bislang im Rahmen der Spezifizierung des UMTS-Standards noch nicht diskutiert worden. Gegenüber den bekannten Verfahren in dem UMTS Release 99 wird in dem HSDPA ein Teil der Ressourcen von den so genannten Steuernden Funknetzsteuerungen (CRNC - Controlling RNC) und ein anderer Teil der Ressourcen (für HSDPA) in den Basisstationen gesteuert. Dies führt dazu, dass eine Basisstation nicht alle Ressourcen in der versorgten Funkzelle steuern kann, sondern nur die dem HSDPA zugewiesenen Ressourcen. Abhängig von den jeweiligen Dienstqualitäts-Anforderungen müssen verschiedene HSDPA-Daten von dem HARQ-Mechanismus unterschiedlich behandelt werden. Überdies ist die Zeitplanung in der Basisstationen ein sehr dynamischer Prozess, und verfügbare Zwischenspeicherkapazität in der Basisstation muss ebenfalls berücksichtigt werden.

Durch die beschriebene Tatsache, dass eine Basisstation potenziell Übertragungen von Datenströmen bzw. Datenpaketen verschiedener Verbindungen mit unterschiedlichen Dienstequalitäts-Anforderungen zu einem Teilnehmerendgerät steuern und durchführen muss, kann es beispielsweise aufgrund von Retransmissions von Datenpaketen eines Dienstes nachteilig zu Verzögerungen bei der Übertragung von Datenpaketen eines weiteren Dienstes kommen. In diesen Fällen ist gegebenenfalls ein Einhalten der vorgegebenen Dienstequalität des weiteren Dienstes nicht mehr möglich, welches zu für den empfangsseitigen Teilnehmer unangenehmen Verzögerungen führen kann.

Aus der US-A-5 734 867 sowie dem Artikel von Skold J et al "Cellular evolution into wideband services" Vehicular Technology Conference, 1997, IEEE 47th Phoenix, AZ, USA, 4-7 May 1997, New York, NY, USA, IEEE, US, 4. Mai 1997 (1997-05-04), Seiten 485-489, XP010228889 ISBN: 0-7803-3659-3, sind Verfahren zur Übertragung von Datenpaketen bekannt, bei dem zwei Teilnehmergeräte einen gemeinsamen Zeitschlitz zeitlich getrennt nutzen. Dabei wird von einer zentralen Zugangssteuerung der Zugriff der Teilnehmergeräte auf den Zeitschlitz abhängig von der jeweiligen Priorität des Teilnehmers gesteuert.

Der Erfindung liegt die Aufgabe zugrunde, ein Verfahren und eine Funkstation anzugeben, die eine Einhaltung von vorgegebenen Dienstqualitätsanforderungen bei der Übertragung von Paketdaten ermöglichen. Diese Aufgabe wird durch die Merkmale der unabhängigen Patentansprüche gelöst. Vorteilhafte Weiterbildungen der Erfindung sind den jeweiligen abhängigen Patentansprüchen entnehmbar.

Das erfindungsgemäße Verfahren wird nachfolgend anhand von Ausführungsbeispielen näher beschrieben. Dabei zeigen
- FIG 1: Ein Blockschaltbild eines Funk-Kommunikationssystems, und
- FIG 2: eine schematische Darstellung der erfindungsgemäßen Verfahrensabläufe in einer sendenden und empfangenden Funkstation.

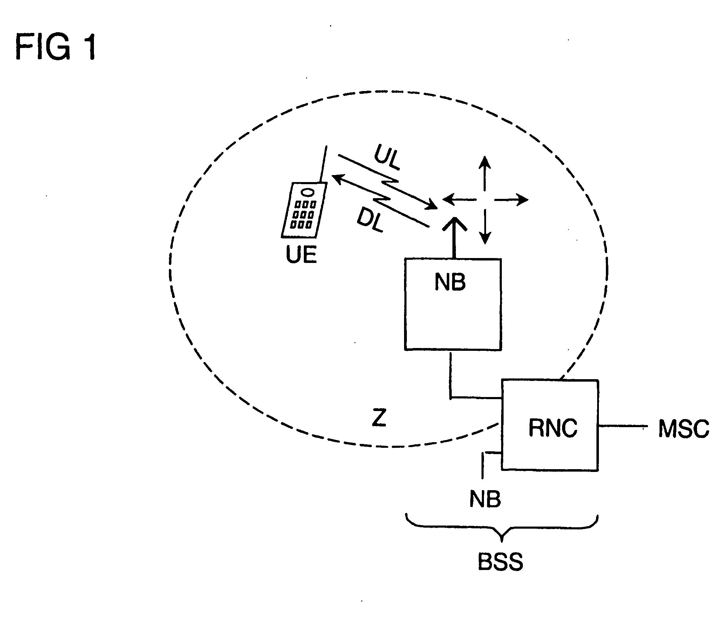

In FIG 1 ist ein beispielhaftes Funk-Kommunikationssystem dargestellt, welches eine Vielzahl von Vermittlungseinrichtungen MSC (engl. Mobile Switching Center) aufweist, die miteinander verbunden sind. In der Regel bildet zumindest eine dieser Vermittlungseinrichtungen MSC einen Zugang zu weiteren Kommunikationssystemen wie beispielsweise einem Festnetz-Kommunikationssystem (PSTN - Public Switched Telephone Network). An die Vermittlungseinrichtungen MSC sind Basisstationen NB (Node B) als Sende-/Empfangseinrichtungen des Funk-Kommunikationssystems angebunden. Die Basisstationen NB stehen über Kommunikationsverbindungen mit Endgeräten, speziell Teilnehmerendgeräten UE (User Equipment) über eine Funkschnittstelle in Verbindung, wobei es sich um mobile oder stationäre Endgeräte handeln kann.

Zwischen der in FIG 1 dargestellten Basisstation NB und dem Teilnehmerendgerät UE im Funkversorgungsbereich dieser Basisstation NB besteht eine unidirektionale bzw. bidirektionale Kommunikationsverbindungen mit einer Aufwärtsrichtung UL (Uplink) von dem Teilnehmerendgerät UE zur Basisstation NB und/oder einer Abwärtsrichtung DL (Downlink) von der Basisstation NB zu dem Teilnehmerendgeräten UE.

Um Dienstqualitäts-Anforderungen verschiedener Dienste, deren Datenströme bzw. Datenpakete über die Funkschnittstelle zwischen einer sendenden und einer empfangenden Funkstation übertragen werden, zu erfüllen, wird erfindungsgemäß vorgeschlagen, dass die sendende Funkstation ein Verwerfen einer andauernden HARQ-Übertragung eines Datenstroms mit einer bestimmten Priorität zugunsten eines Datenstroms mit einer höheren Priorität anregen kann. Die empfangende Funkstation bestätigt oder nicht den Empfang des jeweiligen Datenpakets unabhängig von dem aktuellen HARQ-Protokoll. Für den Fall, dass die empfangende Funkstation ein Datenpaket nicht korrekt empfangen hat, sendet sie gemäß dem HARQ-Protokoll ein NACK (Nicht-Bestätigen - Not Acknowledging) zu der sendenden Funkstation und erwartet eine wiederholte Übertragung dieses spezifischen Datenpakets. Wenn die empfangende Funkstation nachfolgend diese wiederholte Version des Datenpakets nicht empfängt, fordern höhere Schichten, wie beispielsweise der RLC (Radio Link Control) oberhalb des HARQ-Protokolls, gegebenenfalls nochmals die wiederholte Übertragung des Datenpakets an, oder entscheiden, die Verarbeitung ohne dieses Datenpaket fortzusetzen, beispielsweise bei so genannten Streaming-Diensten wie Videoübertragung.

Für die empfangende Funkstation existieren unterschiedliche Möglichkeiten festzustellen, dass eine erwartete wiederholte Übertragung eines nicht korrekt empfangenen Datenpakets nicht erfolgen wird. Eine beispielhafte Möglichkeit wäre die Definition eines Zeitgebers (Timer), nach dessen Ablauf nachfolgende korrekt empfangene Datenpakete an höhere Verarbeitungsschichten weitergegeben werden. Weiterhin können beispielsweise Datenpaketsequenznummern oder Kanalstrukturen für so genannte Stop and Wait-Schemata genutzt werden, beispielsweise in dem Fall, dass in einem der HARQ-Kanäle ein neues Datenpaket bzw. eine erstmalige Übertragung eines Datenpakets empfangen wird, obwohl die wiederholte Übertragung des vorhergehenden Datenpakets noch nicht abgeschlossen ist.

Um dieses Feststellen einer nicht erfolgenden wiederholten Übertragung eines Datenpakets zu beschleunigen, wird erfindungsgemäß mittels Dienstqualitäts- und/oder Prioritäts-Anzeigern der Datenströme der empfangenden Funkstation signalisiert, dass beispielsweise eine andauernde HARQ-Übertragung mit einer bestimmten Priorität zugunsten eines Datenstroms mit einer anderen, in der Regel höheren, Priorität beendet wurde. Die empfangende Funkstation kann hierdurch vorteilhaft auch den neuen Datenstrom erkennen.

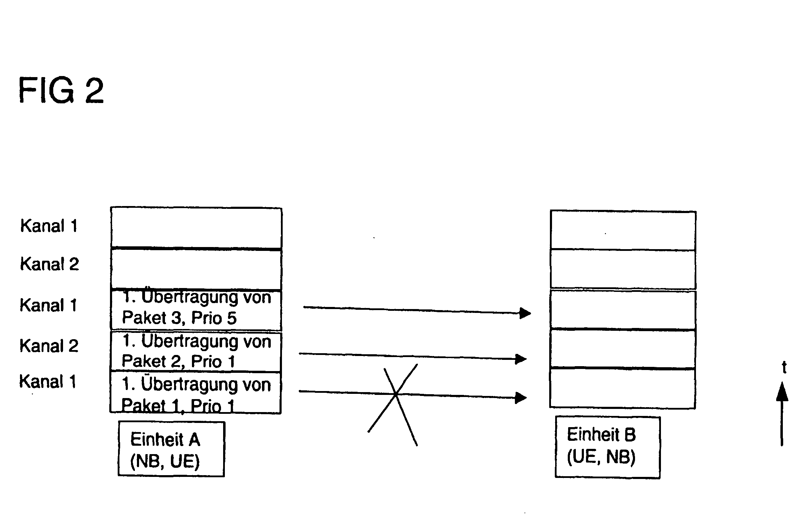

FIG 2 zeigt ein beispielhaftes Ablaufdiagramm des erfindungsgemäßen Verfahrens der Datenübertragung zwischen einer sendenden und einer empfangenden Funkstation. Eine sendende Funkstation, in diesem Beispiel eine als Einheit A bezeichnete Basisstation NB oder ein Teilnehmerendgerät UE, sendet in einem ersten Kanal Kanal 1 eines aus mehreren logischen bzw. physikalischen Übertragungskanälen bestehenden HSDPA-Kanals ein erstes Datenpaket Paket 1 mit einer ersten Priorität Prio 1 zu einer empfangenden Funkstation, in diesem Beispiel ein als Einheit B bezeichnetes Teilnehmerendgerät UE bzw. eine Basisstation NB. Jedem Datenstrom bzw. Dienst wird dabei ein jeweiliger Kanal zugeordnet. Aufgrund beispielsweise von Störungen während der Übertragung des ersten Datenpakets Paket 1 wird dieses von der empfangenden Funkstation Einheit B nicht korrekt empfangen, und - nicht dargestellt - mittels einer Übertragung eines NACK nochmals von der sendenden Funkstation NB angefordert. Nachfolgend überträgt die sendende Funkstation Einheit A ein zweites Datenpaket Paket 2 eines weiteren Dienstes mit einer identischen Priorität Prio 1 in einem zweiten Kanal Kanal 2, das korrekt von der empfangenden Funkstation Einheit B empfangen und durch die - wiederum nicht dargestellte - Übertragung eines ACK bestätigt wird. Anschließend überträgt die sendende Funkstation Einheit A in dem ersten Kanal Kanal 1 ein drittes Datenpaket eines Dienstes mit einer höheren Priorität Prio 5 anstelle einer nochmaligen Übertragung des nicht korrekt empfangenen ersten Datenpakets Paket 1. Die empfangende Funkstation Einheit B kann aufgrund der unterschiedlichen Priorität des dritten Datenpakets Paket 3 und/oder eines Dienstqualitätsanzeigers des Datenstroms erkennen, dass das zur wiederholten Übertragung angeforderte erste Datenpaket Paket 1 nicht nochmals von der sendenden Funkstation Einheit A übertragen wird. Sie kann, wie vorangehend beschrieben, gegebenenfalls mittels einer Signalisierung auf höheren Protokollschichten eine nochmalige Anforderung des ersten Datenpakets initiieren.

Vorteilhaft wird jedes zu übertragende Datenpaket mit einem Prioritätswert Prio verknüpft, wobei ein höherer Prioritätswert eine höhere Priorität des Datenstromes bedeuten kann. Dieses muss jedoch nicht zwangsläufig höhere Dienstqualitäts-Anforderungen bedeuten, jedoch können die Prioritätswerte auch unterschiedliche Dienstqualitäts-Anforderungen definieren. Die sendende Funkstation, beispielsweise die Basisstation, kann vorteilhaft eine autonome Vergabe der Prioritätswerte durchführen, oder alternativ die von der Funknetzsteuerung RNC für jeden Datenstrom empfangenden Prioritätswerte beibehalten. Es kann ebenfalls ein Algorithmus in der sendenden Funkstation verwirklicht werden, der die Prioritätswerte in Abhängigkeit von Dienstqualitäts-Parametern definiert.

Da sowohl die sendende als auch die empfangende Funkstation Kenntnis über die Übertragungskanal-Parameter, wie beispielsweise das Übertragungszeitintervall, die Kodierrate usw., besitzen, kann diese Kenntnis auf der Empfängerseite zusätzlich dazu genutzt werden, die Entscheidungen der sendenden Funkstation zu erkennen, d.h. in FIG 2 würde beispielsweise die Einheit B erkennen, dass der Prioritätswert Prio 5 aufgrund einer robusteren Kodierung wichtiger als der Prioritätswert Prio 1 ist.

Vorteilhaft werden durch das erfindungsgemäße Verfahren effiziente dynamische Zeitplanungsalgorithmen bei gleichzeitiger Erfüllung von Dienstqualitäts-Anforderungen ermöglicht. Weiterhin können Mängel in der Flusssteuerung zwischen den Funknetzsteuerungen RNC und der Basisstation überwunden werden, da die Basisstation mehr Freiheiten besitzt, Dienstqualitäts-Anforderungen unabhängig von Vorgaben der Funknetzsteuerung zu erfüllen. Die empfangende Funkstation ist zudem vorteilhaft in der Lage, alle Entscheidungen der sendenden Funkstation nachvollziehen zu können, Missdeutungen in dem HARQ-Protokoll werden vermieden.

Allgemein eröffnet das erfindungsgemäße Verfahren vorteilhaft die Möglichkeit der Unterstützung eines dynamischen Mechanismus der wiederholten Übertragung bei einer gleichzeitigen vollständigen Unterstützung von Dienstqualitäts-Anforderungen. Prioritätswerte werden in dem HARQ-Protokoll ausgewertet, um das Verwerfen einer andauernden HARQ-Paketübertragung mit einer niedrigeren Priorität zwischen der sendenden und der empfangenden Funkstation "zu verhandeln".

## Patentansprüche

1. Verfahren zur Übertragung von Datenpaketen in einem Funk-Kommunikationssystem, bei dem
eine erste Funkstation (NB, UE, Einheit A) ein Datenpaket (Paket 3) eines Datenstroms mit einer ersten Priorität (Prio 5) zu einer zweiten Funkstation (UE, NB, Einheit B) überträgt, und
die erste Funkstation (NB, UE, Einheit A) von der zweiten Funkstation (UE, NB, Einheit B) bei einem nicht korrekten Empfang des Datenpakets (Paket 3) eine Anforderung für eine wiederholte Übertragung des Datenpakets (Paket 3) empfängt,
**dadurch gekennzeichnet, dass**
die erste Funkstation (NB, UE, Einheit A) die nochmalige Übertragung des Datenpakets (Paket 3) des Datenstroms mit der ersten Priorität (Prio 5) zur Übertragung eines Datenpakets (Paket 1) eines Datenstroms mit einer zweiten Priorität (Prio 1) zu der zweiten Funkstation (UE, NB, Einheit B) unterbricht, wenn die zweite Priorität (Prio 1) höher als die erste Priorität (Prio 5) ist.

2. Verfahren nach Anspruch 1, bei dem
die Prioritäten (Prio 1, Prio 5) abhängig von einer jeweiligen Dienstqualitätsanforderung definiert werden.

3. Verfahren nach Anspruch 1, bei dem
die Prioritäten (Prio 1, Prio 5) unabhängig von einer jeweiligen Dienstqualitätsanforderung definiert werden.

4. Verfahren nach einem vorhergehenden Anspruch, bei dem
jedes Datenpaket (Paket 3, Paket 1) mit einem Priorität- und/oder Dienstqualitätsanzeiger versehen wird.

5. Verfahren nach einem der vorhergehenden Ansprüche, bei dem
die nochmalige Übertragung eines nicht korrekt empfangenen Datenpakets gemäß einem ARQ-basierten Prozess erfolgt.

6. Verfahren nach Anspruch 5, bei dem
der ARQ-basierte Prozess nach Ablauf eines Zeitintervalls beendet wird.

7. Funkstation eines Funk-Kommunikationssystems, mit Mitteln zur Übertragung von Datenpaketen gemäß dem Verfahren nach Anspruch 1.

## Claims

1. Method for transmitting data packets in a radio communication system, in which
A first radio station (NB, UE, Unit A) transmits a data packet (Packet 3) of a data stream with a first priority (Prio 5) to a second radio station (UE, NB, Unit B), and
the first radio station (NB, UE, Unit A), receives from the second radio station (UE, NB, Unit B), if the latter does not receive the data packet (Packet 3) correctly, a request for a repeat transmission of the data packet (Packet 3),
**characterised in that**
the first radio station (NB, UE, Unit A) interrupts the further transmission of the data packet (Packet 3) of the data stream with the first priority (Prio 5) to transmit a data packet (Packet 1) of a data stream with a second priority (Prio 1) to the second radio station (UE, NB, Unit B) if the second priority (Prio 1) is higher than the first priority (Prio 5).

2. Method according to claim 1, in which
the priorities (Prio 1, Prio 5) are defined as a function of a respective quality-of-service requirement.

3. Method according to claim 1, in which
the priorities (Prio 1, Prio 5) are defined independently of a respective quality-of-service requirement.

4. Method according to a preceding claim, in which
each data packet (Packet 3, Packet 1) is provided with a priority and/or quality-of-service indicator.

5. Method according to one of the preceding claims, in which
a retransmission of an incorrectly received data packet is performed according to an ARQ-based process.

6. Method according to claim 5, in which
the ARQ-based process is terminated upon expiration of the time interval.

7. Radio station of a radio communication system with means for transmitting data packets according to the method as claimed in claim 1.

## Revendications

1. Procédé de transmission de paquets de données dans un système de communication radio, dans lequel
une première station radio (NB, UE, Unité A) transmet à une deuxième station radio (UE, NB, Unité B) un paquet de données (paquet 3) d'un flux de données ayant une première priorité (Prio 5), et dans lequel
en cas de réception non correcte du paquet de données (paquet 3), la première station radio (NB, UE, Unité A) reçoit de la deuxième station radio (UE, NB, Unité B) une demande pour une transmission répétée du paquet de données (paquet 3),
**caractérisé en ce que**
la première station radio (NB, UE, Unité A) interrompt la nouvelle transmission du paquet de données (paquet 3) du flux de données ayant la première priorité (Prio 5) pour transmettre à la deuxième station radio (UE, NB, Unité B) un paquet de données (paquet 1) d'un flux de données ayant une deuxième priorité (Prio 1) si la deuxième priorité (Prio 1) est plus élevée que la première priorité (Prio 5).

2. Procédé selon la revendication 1, dans lequel
on définit les priorités (Prio 1, Prio 5) en fonction d'une demande de qualité de service respective.

3. Procédé selon la revendication 1, dans lequel
on définit les priorités (Prio 1, Prio 5) indépendamment d'une demande de qualité de service respective.

4. Procédé selon l'une des revendications précédentes, dans lequel
on munit chaque paquet de données (paquet 3, paquet 1) d'un indicateur de priorité et/ou de qualité de service.

5. Procédé selon l'une des revendications précédentes, dans lequel
la nouvelle transmission d'un paquet de données reçu non correcte s'effectue selon un processus basé ARQ.

6. Procédé selon la revendication 5, dans lequel
on termine le processus basé ARQ au terme d'un intervalle de temps.

7. Station radio d'un système de communication radio, comprenant des moyens permettant la transmission de paquets de données conformément au procédé selon la revendication 1.
